# FASCICULE DE BREVET EUROPEEN

(11) **EP 3 827 624 B1**
(45) Date de publication et mention de la délivrance du brevet: **03.05.2023**
(21) Numéro de dépôt: 19742581.2
(22) Date de dépôt: 19.07.2019
(51) Int. Cl.: H04W 64/00, G01S 5/02, G01S 5/00

(54) **PROCÉDÉ ET SYSTÈME DE GÉOLOCALISATION D'UN TERMINAL À PORTÉE D'UN DISPOSITIF ÉMETTEUR D'INTÉRÊT**
VERFAHREN UND SYSTEM ZUR GEOLOKALISIERUNG EINES ENDGERÄTS IM BEREICH EINER BESTIMMTEN SENDEVORRICHTUNG
METHOD AND SYSTEM FOR GEOLOCATING A TERMINAL IN RANGE OF A TRANSMITTING DEVICE OF INTEREST

(30) Priorité: 24.07.2018 FR 1856863
(43) Date de publication de la demande: 02.06.2021
(73) Titulaire: Sigfox, 31670 Labege (FR)
(72) Inventeur: HUBERT, Loïc, 31410 Saint-Sulpice-Sur-Lèze (FR); CHEVALLIER, Robert, 92100 Boulogne Billancourt (FR); GARNIER, Philippe, 74330 Epagny (FR)
(74) Mandataire: Ipside
(86) Numéro de dépôt international: PCT/EP2019/069514
(87) Numéro de publication internationale: WO 2020/020776

(56) Documents cités:
- WO-A1-2014/155151
- WO-A1-2016/126847
- WO-A1-2016/196431
- US-A1- 2013 324 154
- US-B1- 9 857 162

## Description

### DOMAINE TECHNIQUE

La présente invention concerne un procédé et un système de géolocalisation d'un terminal d'un système de communication sans fil.

L'invention trouve une application particulièrement avantageuse, bien que nullement limitative, pour des applications du type M2M (acronyme anglo-saxon pour « Machine-to-Machine ») ou du type « Internet des objets » (« Internet of Things » ou loT dans la littérature anglo-saxonne).

### ÉTAT DE LA TECHNIQUE

Il existe actuellement de nombreuses solutions permettant d'obtenir la position géographique d'un terminal au niveau d'un réseau d'accès d'un système de communication sans fil.

Par exemple, le terminal peut embarquer un récepteur GPS (« Global Positioning System » dans la littérature anglo-saxonne) lui permettant de déterminer sa position géographique. Le terminal peut alors émettre un message indiquant cette position géographique à destination du réseau d'accès du système de communication sans fil.

Toutefois, il existe également de nombreux terminaux qui ne sont pas équipés de tels récepteurs GPS, pour lesquels il est néanmoins souhaité pouvoir estimer la position géographique.

Il est également connu d'estimer, au niveau du réseau d'accès, la position géographique d'un terminal en fonction de messages émis par ledit terminal et reçus par une ou plusieurs stations de base dudit réseau d'accès.

Par exemple, lorsqu'un même message est reçu par plusieurs stations de base de positions géographiques connues a priori, alors la position géographique dudit terminal peut être estimée, de manière connue, en comparant les niveaux de puissance de réception (« Received Signal Strength Indicator » ou RSSI dans la littérature anglo-saxonne) du message sur chacune des stations de base. Toutefois, de nombreux paramètres (obstacles, trajets multiples, etc.) peuvent influencer le niveau de puissance de réception du message par une station de base, de sorte que la position géographique ainsi estimée du terminal n'est pas toujours très précise.

La position géographique du terminal peut également être estimée, notamment, en comparant les instants d'arrivée (« Time of Arrival » ou TOA dans la littérature anglo-saxonne) du message sur chacune des stations de base. Toutefois, il est alors nécessaire de synchroniser temporellement les stations de base entre elles, et la précision d'estimation de la position géographique dépend de la précision avec laquelle les stations de base sont synchronisées temporellement entre elles. Pour des applications du type loT et/ou M2M, il n'est généralement pas souhaitable de mettre en oeuvre une synchronisation temporelle fine des stations de base entre elles car cela augmenterait la complexité et le coût de fabrication du réseau d'accès. Le document WO 2014/155151 A1 décrit l'utilisation de dérivés raccourcis d'identificateurs d'entités de systèmes de communication à des fins de récupération d'informations de positionnement.

### EXPOSÉ DE L'INVENTION

La présente invention a pour objectif de remédier à tout ou partie des inconvénients de l'art antérieur, notamment ceux exposés ci-avant, en proposant une solution qui permette de déterminer la position géographique d'un terminal d'un système de communication sans fil de manière précise.

En outre, la présente invention a également pour objectif de proposer une solution qui permette, dans certains modes de mise en oeuvre, de limiter la quantité de données échangées entre le terminal et un réseau d'accès du système de communication sans fil.

A cet effet, et selon un premier aspect, l'invention concerne un procédé de géolocalisation d'un terminal d'un système de communication sans fil, le terminal étant adapté à échanger des messages avec un réseau d'accès dudit système de communication sans fil selon un premier protocole de communication sans fil, ledit procédé comportant :
- une réception, par le terminal, d'un message émis selon un second protocole de communication sans fil par un dispositif émetteur d'intérêt,
- une obtention d'une information d'identification ambigüe du dispositif émetteur d'intérêt,
- une émission, par le terminal et à destination du réseau d'accès, d'un message comportant l'information d'identification ambigüe du dispositif émetteur d'intérêt,
- une estimation, par le réseau d'accès, d'une position géographique approximative du terminal,
- une identification, dans une table mémorisant une liste d'identifiants de dispositif émetteurs et les positions géographiques respectives desdits dispositifs émetteurs, du dispositif émetteur d'intérêt comme étant le dispositif émetteur dans la table dont l'identifiant correspond à l'information d'identification ambigüe et dont la position géographique correspond à la position géographique approximative du terminal,
- une estimation de la position géographique précise dudit terminal en fonction de la position géographique du dispositif émetteur d'intérêt, l'information d'identification étant ambiguë en ce qu'elle est susceptible de correspondre à plusieurs dispositifs émetteurs dont les positions géographiques sont mémorisées dans la table.

Ainsi, le réseau d'accès détermine successivement une première estimation de la position géographique du terminal, dite « position géographique approximative », et une seconde estimation de ladite position géographique, dite « position géographique précise ». Par « précise » et « approximative », on entend simplement que la précision de la position géographique précise est en principe meilleure que celle de la position géographique approximative.

Pour estimer la position géographique précise du terminal, le réseau d'accès utilise le fait que le terminal est également capable de recevoir des messages d'au moins un dispositif émetteur d'intérêt dont la position géographique est prédéterminée et mémorisée dans une table comportant une liste de dispositifs émetteurs et leurs positions géographiques respectives.

Le terminal, qui reçoit un message émis par le dispositif émetteur d'intérêt, émet à destination du réseau d'accès un message comportant une information d'identification dudit dispositif émetteur d'intérêt.

Toutefois, cette information d'identification est ambigüe en ce qu'elle est susceptible de correspondre à plusieurs dispositifs émetteurs dont les positions géographiques sont mémorisées dans la table. C'est par exemple le cas si le dispositif émetteur d'intérêt utilise un identifiant local, c'est-à-dire susceptible d'être utilisé par différents dispositifs émetteurs se trouvant à des endroits différents. Mais cela peut être également le cas, notamment, si le dispositif émetteur d'intérêt utilise un identifiant global (c'est-à-dire un identifiant non ambigu qui identifie de manière biunivoque ledit dispositif émetteur d'intérêt) mais que l'information d'identification ambigüe ne reprend que partiellement l'identifiant global dudit dispositif émetteur d'intérêt, par exemple pour réduire la quantité de données à émettre vers le réseau d'accès.

Pour lever l'ambiguïté sur l'identité du dispositif émetteur d'intérêt, le réseau d'accès estime la position géographique approximative du terminal, par exemple en fonction de mesures de RSSI, de mesures de TOA, etc., sur des messages reçus dudit terminal. Etant donné que le dispositif émetteur d'intérêt se trouve au voisinage du terminal, la position géographique approximative du terminal peut être considérée comme représentative de la position géographique approximative dudit dispositif émetteur d'intérêt, et peut donc être utilisée pour lever l'ambiguïté sur l'identité du dispositif émetteur d'intérêt. En effet, même si deux dispositifs émetteurs (ou plus) de la table peuvent correspondre à une même information d'identification ambigüe, lesdits dispositifs émetteurs auront généralement des positions géographiques mémorisées très différentes, de sorte que le dispositif émetteur d'intérêt pourra être identifié, parmi les dispositifs émetteurs de la table correspondant à l'information d'identification ambigüe, comme étant celui dont la position géographique mémorisée correspond à la position géographique approximative du terminal / dispositif émetteur d'intérêt.

La connaissance de la position géographique du dispositif émetteur d'intérêt, qui se trouve au voisinage du terminal, peut être utilisée pour améliorer la précision de l'estimation de la position géographique dudit terminal par rapport à la position géographique approximative. Si la portée du second protocole de communication sans fil est inférieure à la portée du premier protocole de communication sans fil, alors la position géographique précise dudit terminal correspond par exemple directement à la position géographique du dispositif émetteur d'intérêt.

Dans des modes particuliers de mise en oeuvre, le procédé de géolocalisation peut comporter en outre l'une ou plusieurs des caractéristiques suivantes, prises isolément ou selon toutes les combinaisons techniquement possibles.

Dans des modes particuliers de mise en oeuvre, le message reçu dudit dispositif émetteur d'intérêt comporte un identifiant ambigu dudit dispositif émetteur d'intérêt, et l'information d'identification ambigüe correspond audit identifiant.

Dans des modes particuliers de mise en oeuvre, le message reçu dudit dispositif émetteur d'intérêt comporte un identifiant dudit dispositif émetteur d'intérêt, et l'obtention de l'information d'identification ambigüe comporte une compression avec perte de l'identifiant inclus dans le message reçu du dispositif émetteur d'intérêt.

De telles dispositions sont avantageuses en ce qu'elles permettent, grâce à la compression avec perte, de réduire la quantité de données nécessaire pour transmettre une information d'identification ambigüe. Ceci est particulièrement avantageux, notamment, pour des applications de type loT ou M2M, car la quantité de données pouvant être incluse dans un message peut être limitée. En outre, cela peut permettre également d'inclure, dans un même message, des informations d'identification ambigüe pour plusieurs dispositifs émetteurs d'intérêt et/ou d'inclure dans ledit message d'autres informations comme par exemple une information représentative d'un niveau de puissance de réception du message reçu d'un dispositif émetteur d'intérêt, etc.

Du fait de la compression avec perte, l'identifiant peut être rendu ambigu (lorsqu'il est initialement non ambigu) ou être rendu encore plus ambigu (lorsqu'il est initialement ambigu). Toutefois, comme précédemment, la prise en compte de la position géographique approximative du terminal permet en principe de lever l'ambiguïté sur l'identité du dispositif émetteur d'intérêt.

Dans des modes particuliers de mise en oeuvre, plusieurs dispositifs émetteurs d'intérêt sont utilisés, et la position géographique précise dudit terminal est estimée en fonction des positions géographiques respectives desdits dispositif émetteurs d'intérêt.

Dans des modes particuliers de mise en oeuvre, les informations d'identification ambigües d'au moins deux dispositifs émetteurs d'intérêt sont émises, à destination du réseau d'accès, dans un même message selon le premier protocole de communication sans fil.

Dans des modes particuliers de mise en oeuvre, le second protocole de communication sans fil est de portée inférieure à la portée du premier protocole de communication sans fil.

Dans des modes particuliers de mise en oeuvre, la position géographique approximative du terminal est estimée en fonction d'au moins un message reçu par au moins une station de base du réseau d'accès, ladite station de base étant de position géographique prédéterminée.

Dans des modes particuliers de mise en oeuvre, l'estimation de la position géographique approximative du terminal est effectuée par le réseau d'accès sans qu'une information explicite contribuant à cette estimation ne soit envoyée par le terminal dans un message à destination du réseau d'accès. On entend par là que le terminal n'émet pas au réseau d'accès de message dont les données binaires comportent une information permettant d'estimer une position géographique du terminal.

De telles dispositions permettent là encore de limiter la quantité de données échangées entre un terminal et le réseau d'accès pour géolocaliser le terminal. Par exemple, le réseau d'accès peut estimer la position géographique approximative du terminal à partir de métadonnées associées à un ou plusieurs messages du terminal qui ne contiennent pas d'information sur la position géographique du terminal. Les métadonnées peuvent par exemple correspondre à un niveau de puissance pour un message reçu par une station de base du réseau d'accès, à un identifiant d'une station de base ayant reçu un message du terminal, à des mesures de différences de temps d'arrivée d'un même message auprès de différentes stations de base, etc. Différentes méthodes peuvent alors être utilisées pour estimer la position géographique approximative du terminal, comme par exemple une multilatération en fonction des niveaux RSSI ou en fonction des différences de temps d'arrivée. Des méthodes mettant en oeuvre des algorithmes d'apprentissage automatique exploitant les métadonnées peuvent également être mis en oeuvre.

Dans des modes particuliers de mise en oeuvre, le premier protocole de communication sans fil est un protocole de communication de réseau étendu sans fil.

Dans des modes particuliers de mise en oeuvre, le second protocole de communication sans fil est un protocole de communication de réseau local sans fil ou de réseau personnel sans fil.

Selon un second aspect, l'invention concerne un terminal d'un système de communication sans fil, ledit terminal comportant un premier module de communication adapté à échanger des messages avec un réseau d'accès du système de communication sans fil selon un premier protocole de communication sans fil, et un second module de communication adapté à recevoir des messages selon un second protocole de communication sans fil. Ledit terminal est configuré pour :
- recevoir, par le second module de communication, un message émis par un dispositif émetteur d'intérêt,
- obtenir, par un circuit de traitement du terminal, une information d'identification ambigüe dudit dispositif émetteur d'intérêt,
- émettre à destination du réseau d'accès (30), par le premier module de communication, un message comportant l'information d'identification ambigüe dudit dispositif émetteur d'intérêt, l'information d'identification étant ambiguë en ce qu'elle est susceptible de correspondre à plusieurs dispositifs émetteurs dont les positions géographiques sont mémorisées dans la table.

Dans des modes particuliers de réalisation, le terminal peut comporter en outre l'une ou plusieurs des caractéristiques suivantes, prises isolément ou selon toutes les combinaisons techniquement possibles.

Dans des modes particuliers de réalisation, le circuit de traitement est configuré pour obtenir l'information d'identification ambigüe du dispositif émetteur d'intérêt à partir d'un identifiant dudit dispositif émetteur d'intérêt inclus dans le message reçu dudit dispositif émetteur d'intérêt.

Dans des modes particuliers de réalisation, le circuit de traitement est configuré pour obtenir l'information d'identification ambigüe du dispositif émetteur d'intérêt par compression avec perte de l'identifiant dudit dispositif émetteur d'intérêt.

Selon un troisième aspect, l'invention concerne un réseau d'accès d'un système de communication sans fil, ledit réseau d'accès étant adapté à échanger des messages avec un terminal, ledit réseau d'accès étant configuré pour :
- recevoir un message émis par le terminal, ledit message comportant une information d'identification ambigüe d'un dispositif émetteur d'intérêt au voisinage dudit terminal,
- estimer une position géographique approximative du terminal,
- identifier, dans une table mémorisant une liste d'identifiants de dispositif émetteurs et les positions géographiques respectives desdits dispositifs émetteurs, le dispositif émetteur d'intérêt comme étant le dispositif émetteur dans la table dont l'identifiant correspond à l'information d'identification ambigüe et dont la position géographique correspond à la position géographique approximative du terminal,
- estimer la position géographique précise dudit terminal en fonction de la position géographique du dispositif émetteur d'intérêt, l'information d'identification étant ambiguë en ce qu'elle est susceptible de correspondre à plusieurs dispositifs émetteurs dont les positions géographiques sont mémorisées dans la table.

Dans des modes particuliers de réalisation, le réseau d'accès peut comporter en outre l'une ou plusieurs des caractéristiques suivantes, prises isolément ou selon toutes les combinaisons techniquement possibles.

Dans des modes particuliers de réalisation, la table étant mémorisée dans un serveur de géolocalisation externe audit réseau d'accès, ledit réseau d'accès comporte un serveur d'interrogation configuré pour :
- émettre une requête de position géographique du dispositif émetteur d'intérêt à destination dudit serveur de géolocalisation, ladite requête de position géographique comportant l'information d'identification ambigüe du dispositif émetteur d'intérêt et la position géographique approximative du terminal,
- recevoir dudit serveur de géolocalisation une réponse comportant la position géographique dudit dispositif émetteur d'intérêt.

Dans des modes particuliers de réalisation, la table étant mémorisée dans un serveur de géolocalisation externe audit réseau d'accès, ledit réseau d'accès comporte un serveur d'interrogation configuré pour :
- émettre une requête de position géographique du dispositif émetteur d'intérêt à destination dudit serveur de géolocalisation, ladite requête de position géographique comportant l'information d'identification ambigüe du dispositif émetteur d'intérêt,
- recevoir dudit serveur de géolocalisation une réponse comportant les positions géographiques des dispositifs émetteurs dont les identifiants correspondent à l'information d'identification ambigüe, ledit réseau d'accès étant configuré pour identifier la position géographique du dispositif émetteur d'intérêt comme étant la position géographique reçue correspondant à la position géographique approximative du terminal.

Selon un quatrième aspect, l'invention concerne un système de communication sans fil comprenant un terminal selon l'un quelconque des modes de réalisation de l'invention et un réseau d'accès selon l'un quelconque des modes de réalisation de l'invention.

Selon un cinquième aspect, l'invention concerne un serveur de géolocalisation comportant des moyens de mémorisation dans lesquels est mémorisée une table comportant une liste d'identifiants de dispositifs émetteurs et les positions géographiques respectives desdits dispositifs émetteurs, ledit serveur de géolocalisation comportant en outre des moyens configurés pour :
- recevoir une requête de position géographique d'un dispositif émetteur d'intérêt, ladite requête de position géographique comportant une information d'identification ambigüe du dispositif émetteur d'intérêt et une position géographique approximative,
- identifier un dispositif émetteur dans la table dont l'identifiant mémorisé correspond à l'information d'identification ambigüe reçue et dont la position géographique correspond à la position géographique approximative reçue,
- émettre une réponse comportant la position géographique du dispositif émetteur identifié dans la table, l'information d'identification étant ambiguë en ce qu'elle est susceptible de correspondre à plusieurs dispositifs émetteurs dont les positions géographiques sont mémorisées dans la table.

### PRÉSENTATION DES FIGURES

L'invention sera mieux comprise à la lecture de la description suivante, donnée à titre d'exemple nullement limitatif, et faite en se référant aux figures qui représentent :
- Figure 1 : une représentation schématique d'un exemple de réalisation système de communication sans fil,
- Figure 2 : une représentation schématique d'un exemple de réalisation d'un terminal,
- Figure 3 : un diagramme illustrant les principales étapes d'un procédé de géolocalisation,
- Figure 4 : une représentation schématique d'un système de communication comportant un réseau d'accès qui interroge un serveur de géolocalisation distant.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

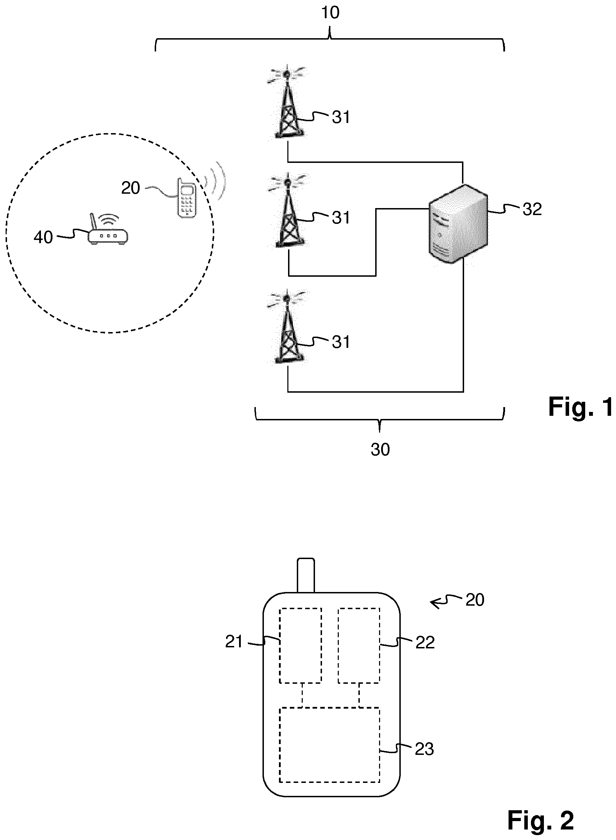

La figure 1 représente schématiquement un système 10 de communication sans fil, comportant au moins un terminal 20 et un réseau d'accès 30 comportant plusieurs stations de base 31.

Le terminal 20 est adapté à émettre des messages sur un lien montant à destination du réseau d'accès 30. Chaque station de base 31 est adaptée à recevoir les messages du terminal 20 lorsque ledit terminal se trouve à sa portée. Chaque message ainsi reçu est par exemple transmis à un serveur 32 du réseau d'accès 30, éventuellement accompagné d'autres informations comme un identifiant de la station de base 31 qui l'a reçu, le niveau de puissance de réception dudit message reçu, l'instant d'arrivée dudit message, etc. Le serveur 32 traite par exemple l'ensemble des messages reçus des différentes stations de base 31.

Le système 10 de communication sans fil peut être monodirectionnel, c'est-à-dire qu'il ne permet des échanges de messages que sur le lien montant du terminal 20 vers le réseau d'accès 30. Rien n'exclut cependant, suivant d'autres exemples, de permettre des échanges bidirectionnels. Le cas échéant, le réseau d'accès 30 est également adapté à émettre, par l'intermédiaire des stations de base 31, des messages sur un lien descendant à destination du terminal 20, lequel est adapté à les recevoir.

Les échanges de messages sur le lien montant utilisent un premier protocole de communication sans fil.

Dans des modes particuliers de réalisation, le premier protocole de communication sans fil est un protocole de communication de réseau étendu sans fil (« Wireless Wide Area Network » ou WWAN dans la littérature anglo-saxonne). Par exemple, le premier protocole de communication sans fil est un protocole de communication normalisé de type UMTS (« Universal Mobile Télécommunications System »), LTE (« Long Term Evolution), LTE-Advanced Pro, 5G, etc. Alternativement, le premier protocole de communication sans fil est par exemple un protocole de communication propriétaire à bande ultra étroite. Par « bande ultra étroite » (« Ultra Narrow Band » ou UNB dans la littérature anglo-saxonne), on entend que le spectre fréquentiel instantané des signaux radioélectriques émis par les terminaux est de largeur fréquentielle inférieure à deux kilohertz, voire inférieure à un kilohertz.

Tel qu'illustré par la figure 1, le terminal 20 est également adapté à recevoir des messages émis par au moins un dispositif émetteur d'intérêt 40, qui se trouve au voisinage dudit terminal 20. Les messages émis par le dispositif émetteur d'intérêt 40 utilisent un second protocole de communication sans fil, différent du premier protocole de communication sans fil. Il est à noter que le dispositif émetteur d'intérêt 40 peut être entièrement indépendant du système 10 de communication sans fil, et n'a pas besoin de supporter le premier protocole de communication sans fil.

La position géographique du dispositif émetteur d'intérêt 40 est prédéterminée et mémorisée dans une table comportant une liste d'identifiants de dispositifs émetteurs différents, et les positions géographiques respectives desdits dispositifs émetteurs.

Dans des modes préférés de réalisation, le second protocole de communication sans fil est de portée inférieure à la portée du premier protocole de communication sans fil. Dans un tel cas, la position géographique du dispositif émetteur d'intérêt 40, dans la portée duquel se trouve le terminal 20, fournit une information plus précise sur la position géographique du terminal 20 que, par exemple, la position géographique d'une station de base 31 qui reçoit un message émis par le terminal 20. Dans le cas où le premier protocole de communication sans fil est un protocole de communication de réseau étendu sans fil, le second protocole de communication sans fil est par exemple un protocole de communication de réseau local sans fil (« Wireless Local Area Network » ou WLAN dans la littérature anglo-saxonne), par exemple de type WiFi (normes IEEE 802.11), etc., ou encore un protocole de communication de réseau personnel sans fil (« Wireless Personal Area Network » ou WPAN dans la littérature anglo-saxonne), par exemple de type Bluetooth, etc.

Il est cependant à noter qu'il est également possible, suivant d'autres exemples, d'avoir un second protocole de communication sans fil dont la portée n'est pas inférieure à celle du premier protocole de communication sans fil. Le cas échéant, il est possible de considérer le dispositif émetteur d'intérêt 40 comme étant un équipement supplémentaire dans la portée duquel se trouve le terminal 20, ce qui peut permettre d'améliorer la précision de l'estimation de la position géographique du terminal 20 en prenant en compte le position du dispositif émetteur d'intérêt 40 en plus des positions géographiques des stations de base 31 du réseau d'accès 30.

La figure 2 représente schématiquement un exemple de réalisation d'un terminal 20.

Tel qu'illustré par la figure 2, le terminal 20 comporte un premier module de communication 21 adapté à échanger des messages avec les stations de base 31 selon le premier protocole de communication sans fil. Le premier module de communication 21 se présente par exemple sous la forme d'un circuit radioélectrique comportant des équipements (antenne, amplificateur, oscillateur local, mélangeur, filtre analogique, etc.).

Le terminal 20 comporte également un second module de communication 22 adapté à recevoir des messages émis par le dispositif émetteur d'intérêt 40, selon le second protocole de communication sans fil. Le second module de communication 22 se présente par exemple sous la forme d'un circuit radio électrique comportant des équipements (antenne, amplificateur, oscillateur local, mélangeur, filtre analogique, etc.).

En outre, le terminal 20 comporte également un circuit de traitement 23, relié au premier module de communication 21 et au second module de communication 22. Le circuit de traitement 23 comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en oeuvre certaines étapes d'un procédé 60 de géolocalisation décrit ci-après. Alternativement ou en complément, le circuit de traitement 23 comporte un ou des circuits logiques programmables (FPGA, PLD, etc.), et/ou un ou des circuits intégrés spécialisés (ASIC, etc.), et/ou un ensemble de composants électroniques discrets, etc.

En d'autres termes, le circuit de traitement 23 comporte un ensemble de moyens configurés de façon logicielle (produit programme d'ordinateur spécifique) et/ou matérielle (FPGA, PLD, ASIC, composants électroniques discrets, etc.) pour mettre en oeuvre, en collaboration avec le premier module de communication 21 et le second module de communication 22, certaines étapes du procédé 60 de géolocalisation décrit ci-après.

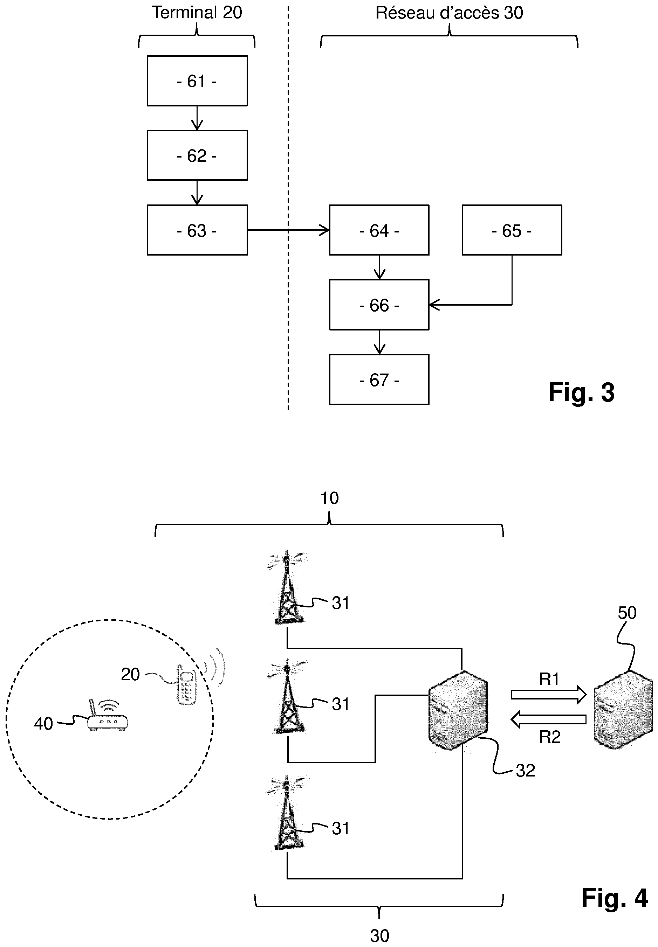

La figure 3 représente schématiquement les principales étapes d'un procédé 60 de géolocalisation du terminal 20, lesquelles sont :
- une étape 61 de réception, par le terminal 20, d'un message émis selon un second protocole de communication sans fil par le dispositif émetteur d'intérêt 40,
- une étape 62 d'obtention d'une information d'identification ambigüe du dispositif émetteur d'intérêt,
- une étape 63 d'émission, par le terminal 20 et à destination du réseau d'accès 30, d'un message comportant l'information d'identification ambigüe du dispositif émetteur d'intérêt 40,
- une étape 64 de réception du message comportant l'information d'identification ambigüe par le réseau d'accès 30,
- une étape 65 d'estimation, par le réseau d'accès 30, d'une position géographique approximative du terminal 20,
- une étape 66 d'identification, en fonction de la position géographique approximative et de l'information d'identification ambigüe, du dispositif émetteur d'intérêt 40 dans une table mémorisant une liste d'identifiants de dispositif émetteurs et les positions géographiques respectives desdits dispositifs émetteurs,
- une étape 67 d'estimation de la position géographique précise dudit terminal 20 en fonction de la position géographique du dispositif émetteur identifié dans la table comme étant le dispositif émetteur d'intérêt 40.

Il est à noter que l'agencement des étapes illustré par la figure 3 est principalement illustratif, et n'est pas nécessairement représentatif de l'ordre temporel d'exécution desdites étapes. Notamment, l'étape 65 d'estimation de la position géographique approximative du terminal 20 peut être exécutée indépendamment des étapes 61 de réception du message émis par le dispositif émetteur d'intérêt 40, 62 d'obtention de l'information d'identification ambigüe et 63 d'émission exécutées par le terminal 20.

Les étapes 64 de réception du message émis par le terminal 20, 65 d'estimation de la position géographique approximative du terminal 20, 66 d'identification du dispositif émetteur d'intérêt 40 et 67 d'estimation de la position géographique précise dudit terminal 20 sont exécutées par le réseau d'accès 30, c'est-à-dire par une ou plusieurs stations de base 31 et/ou par le serveur 32. Au cours de certaines de ces étapes, le réseau d'accès 30 peut éventuellement faire appel à des équipements externes audit réseau d'accès 30, et peut notamment interroger un serveur de géolocalisation 50 distant, externe audit réseau d'accès 30, mémorisant la table.

Dans la suite de la description, on se place de manière non limitative dans le cas où les étapes exécutées par le réseau d'accès 30, à l'exception de l'étape 64 de réception, sont toutes mises en oeuvre par le serveur 32, qui reçoit des stations de base 31 les messages reçus du terminal 20.

A cet effet, les stations de base 31 et le serveur 32 comportent des moyens de communication de réseau respectifs, considérés comme connus de l'homme de l'art, permettant aux stations de base 31 de transmettre chaque message reçu au serveur 32.

Le serveur 32 comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en oeuvre lesdites étapes du procédé 60 de géolocalisation. Alternativement ou en complément, le serveur 32 comporte un ou des circuits logiques programmables (FPGA, PLD, etc.), et/ou un ou des circuits intégrés spécialisés (ASIC), et/ou un ensemble de composants électroniques discrets, etc., adaptés à mettre en oeuvre tout ou partie desdites étapes du procédé 60 de géolocalisation.

En d'autres termes, le serveur 32 comporte un ensemble de moyens configurés de façon logicielle (produit programme d'ordinateur spécifique) et/ou matérielle (FPGA, PLD, ASIC, composants électroniques discrets, etc.) pour mettre en oeuvre lesdites étapes du procédé 60 de géolocalisation.

On décrit à présent des exemples non limitatifs de mise en oeuvre des différentes étapes illustrées par la figure 3.

Au cours de l'étape 61 de réception, le second module de communication 22 du terminal 20 reçoit un message émis par le dispositif émetteur d'intérêt 40. Le dispositif émetteur d'intérêt 40 est par exemple un point d'accès WiFi ou un point d'accès Bluetooth, etc., à portée duquel se trouve ledit terminal 20.

Au cours de l'étape 62, le circuit de traitement 23 du terminal 20 obtient, de préférence à partir du message reçu du dispositif émetteur d'intérêt 40, une information d'identification ambigüe dudit dispositif émetteur d'intérêt 40. Par « information d'identification ambigüe », on entend que celle-ci est susceptible de correspondre à plusieurs dispositifs émetteurs dont les positions géographiques sont mémorisées dans la table. En d'autres termes, l'utilisation de cette seule information d'identification ambigüe ne permet pas de savoir avec certitude quel dispositif émetteur de la table correspond au dispositif émetteur d'intérêt 40.

De manière générale, le message émis par le dispositif émetteur d'intérêt 40 comporte un identifiant dudit dispositif émetteur d'intérêt. Cet identifiant peut être local, c'est-à-dire un identifiant susceptible d'être utilisé par différents dispositifs émetteurs se trouvant à des endroits différents, ou encore un identifiant global (c'est-à-dire un identifiant non ambigu qui identifie de manière biunivoque ledit dispositif émetteur d'intérêt).

Par exemple, si le dispositif émetteur d'intérêt 40 est un point d'accès WiFi, il dispose d'une adresse MAC (« Medium Access Control ») qui correspond à un identifiant global utilisé uniquement par ce dispositif émetteur d'intérêt 40 et par aucun autre dispositif émetteur. Le dispositif émetteur d'intérêt 40 dispose également d'un SSID (« Service Set identifier ») qui est un identifiant généralement local, susceptible d'être réutilisé par un autre dispositif émetteur situé à un endroit différent.

Suivant un premier exemple, le terminal 20 extrait un identifiant local du message reçu du dispositif émetteur d'intérêt 40, par exemple un SSID. Un tel identifiant local est par construction déjà ambigu, et peut être utilisé comme tel comme information d'identification ambigüe. L'étape 62 d'obtention peut alors consister à extraire l'identifiant local du message reçu, l'information d'identification ambigüe étant directement égale à cet identifiant local. Il est cependant également possible, suivant d'autres exemples, d'obtenir l'information d'identification ambigüe en modifiant ledit identifiant local au moyen d'une fonction prédéterminée, permettant par exemple de réduire la quantité de données à émettre.

Suivant un autre exemple, le terminal 20 extrait un identifiant global du message reçu du dispositif émetteur d'intérêt 40, par exemple une adresse MAC. Un tel identifiant global n'est pas ambigu mais représente une quantité de données qui peut être trop importante à émettre vers le réseau d'accès 30, en particulier pour des applications du type loT ou M2M. La transformation de l'identifiant global en information d'identification ambigüe vise principalement dans ce cas à réduire la quantité de données à émettre, et l'ambiguïté est le résultat de cette réduction de la quantité de données. L'étape 62 d'obtention comporte alors l'extraction dudit identifiant global du message reçu, et la modification dudit identifiant global au moyen d'une fonction prédéterminée visant à réduire la quantité de données dudit identifiant global. Cette modification correspond par exemple à une compression avec perte, c'est-à-dire qu'il n'est pas possible, à partir de la seule information d'identification ambigüe obtenue, de retrouver l'identifiant global. De manière générale, toute méthode connue de compression avec perte peut être mise en oeuvre, et le choix d'une méthode particulière ne constitue qu'une variante d'implémentation de l'invention. Par exemple, si l'identifiant global se présente sous la forme d'une séquence de bits, la compression avec perte correspond à une suppression de certains bits dudit identifiant global. Dans le cas d'une adresse MAC, constituée de 48 ou 64 bits, la compression avec perte peut consister à supprimer certains bits de poids fort, par exemple les 16 bits de poids fort, ou encore les 24 bits de poids fort. Suivant un autre exemple, la compression avec perte peut être effectuée, alternativement ou en complément de la suppression de certains bits, au moyen d'une fonction de hachage cryptographique (par exemple une fonction MD5 ou SHA-1).

Ainsi, suivant les cas, l'information d'identification ambigüe peut correspondre directement à l'identifiant extrait du message reçu du dispositif émetteur d'intérêt 40 (si cet identifiant est lui-même ambigu) ou peut être obtenu en appliquant une fonction prédéterminée audit identifiant extrait, cette fonction prédéterminée visant préférentiellement à réduire la quantité de données nécessaires pour émettre l'information d'identification ambigüe.

Au cours de l'étape 63 d'émission, le premier module de communication 21 du terminal 20 émet, à destination du réseau d'accès 30, un message comportant l'information d'identification ambigüe. Ce message est reçu, au cours de l'étape 64, par une ou plusieurs stations de base 31 du réseau d'accès 30.

Il est à noter qu'un autre avantage lié à l'utilisation d'une information d'identification ambigüe réside dans le fait que cela ajoute de la confidentialité dans les données transmises. En effet, l'information d'identification ambigüe ne permet pas à elle seule de savoir avec certitude quel dispositif émetteur se trouve au voisinage du terminal 20, et ne permet donc pas de déterminer à elle seule la position dudit terminal 20. Ainsi, si le message est intercepté par une entité malveillante, cette entité malveillante ne serait pas capable de déterminer la position du terminal 20 à partir du seul contenu du message intercepté. C'est tout particulièrement le cas, notamment, lorsque l'information d'identification ambigüe est obtenue par compression avec perte d'un identifiant global du dispositif émetteur d'intérêt 40.

Au cours de l'étape 65, le réseau d'accès 30 estime la position géographique dite approximative dudit terminal 20. Il est à noter que, par « approximative » on entend uniquement que la précision de la position géographique approximative estimée est en principe inférieure à la précision de la position géographique dite précise qui est estimée au cours de l'étape 67.

Dans l'exemple considéré, le réseau d'accès 30 est configuré pour estimer la position géographique approximative du terminal 20 en fonction de messages reçus dudit terminal 20. Dans des modes préférés de mise en oeuvre, la position géographique approximative est estimée à partir du message reçu comportant l'information d'identification ambigüe. Rien n'exclut cependant, suivant d'autres exemples, d'estimer la position géographique approximative dudit terminal 20 à partir de messages émis par ledit terminal 20 autres que ledit message comportant l'information d'identification ambigüe.

De manière générale, toute méthode d'estimation de la position géographique approximative peut être mise en oeuvre, et le choix d'une méthode particulière ne constitue qu'une variante d'implémentation de l'invention. Par exemple, le réseau d'accès 30 peut estimer la position géographique approximative du terminal 20 comme étant la position géographique d'une station de base 31 qui a reçu un message émis par le terminal 20. Si plusieurs stations de base 31 peuvent recevoir un message émis par le terminal 20, il est possible d'estimer la position géographique approximative du terminal 20 en fonction des positions géographiques de toutes les stations de base 31 qui ont reçu le message émis par le terminal 20 (par exemple en définissant un barycentre de ces positions géographiques).

Selon un autre exemple, le réseau d'accès 30 peut estimer les distances qui séparent le terminal 20 d'une ou plusieurs stations de base 31 en calculant le temps de propagation d'un message émis par le terminal 20 à destination des stations de base 31 à partir des mesures TOA ou de mesures de différences d'instants d'arrivée (« Time Différence of Arrival » ou TDOA dans la littérature anglo-saxonne) de ce message au niveau des différentes stations de base 31. Il est alors ensuite possible d'estimer la position du terminal 20 par multilatération si les positions géographiques des stations de base 31 sont connues.

Selon un autre exemple, il est possible d'estimer la position du terminal 20 par multilatération en déterminant les distances qui séparent le terminal 20 de plusieurs stations de base 31 à partir d'une mesure RSSI pour chaque station de base 31 pour un message émis par le terminal 20 à destination du réseau d'accès 30.

Selon encore un autre exemple, la méthode d'estimation d'une position géographique approximative du terminal 20 par le réseau d'accès 30 peut reposer sur des techniques d'apprentissage automatique (« Machine Learning » dans la littérature anglo-saxonne) qui associent une empreinte (« fingerprint ») à une position géographique de la zone géographique considérée. Une telle méthode se base sur l'hypothèse qu'un niveau de puissance de réception par une station de base 31 pour un message émis par le terminal 20 situé à une position géographique donnée est stable dans le temps. Concrètement, il s'agit de construire pendant une première phase de calibration, une base de données qui associe à des positions géographiques connues une « signature radio » correspondant à l'ensemble des mesures RSSI obtenues pour un terminal 20 à la position géographique considérée pour un ensemble de stations de base 31. Ensuite, pendant une phase de recherche, une signature radio observée pour le terminal 20 dont on cherche à estimer la position géographique approximative est comparée à l'ensemble des signatures radio de la base de données afin d'estimer la position géographique approximative du terminal 20 à partir de la (ou des) position(s) géographique(s) correspondant à la (aux) signature(s) radio la (les) plus ressemblante(s) à la signature radio du terminal 20.

Dans des modes préférés de mise en oeuvre, l'estimation de la position géographique approximative du terminal est effectuée par le réseau d'accès sans qu'une information explicite contribuant à cette estimation ne soit envoyée par le terminal dans un message à destination du réseau d'accès (autrement dit, le terminal n'émet pas au réseau d'accès de message dont les données binaires comportent une information permettant d'estimer une position géographique du terminal). De telles dispositions permettent de limiter la quantité de données échangées entre le terminal et le réseau d'accès pour mettre en oeuvre le procédé de géolocalisation selon l'invention.

Le dispositif émetteur d'intérêt 40 étant situé au voisinage du terminal 20, la position géographique approximative du terminal 20 correspond également à la position géographique approximative du dispositif émetteur d'intérêt 40 (à la portée du second protocole de communication sans fil près).

Au cours de l'étape 66 d'identification, la position géographique approximative du terminal 20 et l'information d'identification ambigüe du dispositif émetteur d'intérêt 40 sont utilisées pour rechercher ledit dispositif émetteur d'intérêt 40 parmi les dispositifs émetteurs dont les positions géographiques sont mémorisées dans la table.

De manière générale, le dispositif émetteur d'intérêt 40 est le dispositif émetteur dans la table dont l'identifiant correspond à l'information d'identification ambigüe reçue et dont la position géographique correspond à la position géographique approximative reçue. Ainsi, l'étape 66 d'identification comporte la comparaison de l'information d'identification ambigüe avec des identifiants mémorisés dans la table et la comparaison de la position géographique approximative avec des positions géographiques mémorisées dans ladite table.

Il est à noter que les identifiants mémorisés dans la table peuvent être ceux que les dispositifs émetteurs incorporent dans les messages qu'ils émettent ou, lorsque l'information d'identification ambigüe est obtenue en appliquant une fonction prédéterminée (suppression de bits, fonction de hachage cryptographique, etc.), le résultat de cette fonction prédéterminée. Par exemple, dans le cas d'une adresse MAC, alors l'identifiant mémorisé dans la table est par exemple soit l'adresse MAC complète soit le résultat de la fonction prédéterminée appliquée à ladite adresse MAC. Dans le cas où l'adresse MAC complète est mémorisée, alors la comparaison avec l'information d'identification ambigüe nécessite d'appliquer préalablement la fonction prédéterminée sur l'adresse MAC mémorisée. Dans le cas où l'identifiant mémorisé dans la table correspond au résultat de la fonction prédéterminée appliquée à l'adresse MAC complète, ledit identifiant peut être directement comparé à l'information d'identification ambigüe reçue.

Par exemple, il est possible, de manière non limitative, d'identifier dans un premier temps tous les dispositifs émetteurs de la table dont les identifiants mémorisés correspondent à l'information d'identification ambigüe du dispositif émetteur d'intérêt 40. Dans un second temps, les positions géographiques des dispositifs émetteurs dont les identifiants mémorisés correspondent à l'information d'identification ambigüe sont comparées à la position géographique approximative du terminal 20 / dispositif émetteur d'intérêt 40. Le dispositif émetteur d'intérêt 40 est considéré comme étant le dispositif émetteur mémorisé, parmi ceux dont l'identifiant correspond à l'information d'identification ambigüe, dont la position géographique mémorisée est la plus proche de la position géographique approximative.

La table est par exemple mémorisée dans un équipement du réseau d'accès 30, par exemple dans le serveur 32. Dans un tel cas, l'étape 66 d'identification peut être entièrement exécutée par le réseau d'accès 30, sans faire appel à un équipement externe.

Alternativement, la table peut être mémorisée dans un serveur de géolocalisation 50 externe au réseau d'accès 30. Dans un tel cas, le réseau d'accès 30 peut comporter un serveur d'interrogation, qui peut être le serveur 32 ou un équipement distinct, configuré pour interroger à distance le serveur de géolocalisation 50.

La figure 4 représente schématiquement un exemple de réalisation dans lequel la table est mémorisée dans un serveur de géolocalisation 50 externe audit réseau d'accès 30, qui est interrogé à distance par un serveur d'interrogation. Dans l'exemple non limitatif illustré par la figure 4, le serveur d'interrogation correspond au serveur 32 de la figure 1.

Tel qu'illustré par la figure 4, le serveur 32 émet une requête R1 de position géographique du dispositif émetteur d'intérêt 40 à destination dudit serveur de géolocalisation 50.

La requête R1 de position géographique comporte au moins l'information d'identification ambigüe du dispositif émetteur d'intérêt 40 et, de préférence, la position géographique approximative du terminal 20. Dans ce cas, le serveur de géolocalisation 50 identifie directement le dispositif émetteur dans la table qui correspond au dispositif émetteur d'intérêt, et envoie au serveur une réponse R2 comportant la position géographique dudit dispositif émetteur identifié comme étant le dispositif émetteur d'intérêt 40.

Dans un autre exemple, la requête R1 de position géographique ne comporte pas la position géographique approximative du terminal 20. Dans un tel cas, le serveur de géolocalisation 50 identifie tous les dispositifs émetteurs de la table dont les identifiants correspondent à l'information d'identification ambigüe, et envoie dans la réponse R2 les positions géographiques de tous les dispositifs émetteurs susceptibles de correspondre au dispositif émetteur d'intérêt 40. C'est alors le réseau d'accès 30, par exemple le serveur 32, qui compare les positions géographiques reçues dans la réponse R2 à la position géographique approximative. La position géographique reçue qui est la plus proche de la position géographique approximative est considérée comme étant la position géographique du dispositif émetteur d'intérêt 40.

Le serveur de géolocalisation 50 comporte par exemple un ou plusieurs processeurs et des moyens de mémorisation (disque dur magnétique, mémoire électronique, disque optique, etc.) dans lesquels sont mémorisés la table et un produit programme d'ordinateur, sous la forme d'un ensemble d'instructions de code de programme à exécuter pour traiter les requêtes R1 de positions géographiques. Alternativement ou en complément, le serveur de géolocalisation 50 comporte un ou des circuits logiques programmables (FPGA, PLD, etc.), et/ou un ou des circuits intégrés spécialisés (ASIC, etc.), et/ou un ensemble de composants électroniques discrets, etc.

En d'autres termes, le serveur de géolocalisation 50 comporte un ensemble de moyens configurés de façon logicielle (produit programme d'ordinateur spécifique) et/ou matérielle (FPGA, PLD, ASIC, composants électroniques discrets, etc.) pour traiter les requêtes R1 de positions géographiques de dispositifs émetteurs d'intérêt 40.

Au cours de l'étape 67, le réseau d'accès 30 estime la position géographique précise du terminal 20 à partir de la position géographique du dispositif émetteur d'intérêt obtenue à partir de la table.

Par exemple, la position géographique précise du terminal 20 est choisie égale à la position géographique reçue pour le dispositif émetteur d'intérêt 40. Toutefois, il est également possible, suivant d'autres exemples, de mettre en oeuvre d'autres méthodes d'estimation.

Notamment, il est possible de considérer plusieurs dispositifs émetteurs d'intérêt qui peuvent être de même type (par exemple des points d'accès WiFi uniquement) ou de types différents (par exemple des points d'accès WiFi et des points d'accès Bluetooth). Dans un tel cas, le terminal 20 reçoit un message de chacun de ces dispositifs émetteurs d'intérêt 40 et obtient une information d'identification ambigüe pour chacun de ces dispositifs émetteurs d'intérêt 40. Les informations d'identification ambigüe sont émises à destination du réseau d'accès 30, en minimisant de préférence le nombre de messages à cet effet. En particulier, l'intérêt de réduire la quantité de données en appliquant une compression avec perte réside également dans le fait qu'il peut alors être possible d'émettre plusieurs informations d'identification ambigüe dans un même message, ce qui permet notamment de réduire la consommation électrique du terminal 20. Ensuite, les positions géographiques des dispositifs émetteurs d'intérêt 40 sont identifiées dans la table, et la position géographique précise du terminal 20 peut être estimée à partir des positions géographiques des dispositifs émetteurs d'intérêt 40, en mettant oeuvre par exemple des méthodes décrites en référence à l'étape 65 d'estimation de la position géographique approximative du terminal 20. Notamment, le terminal 20 peut effectuer des mesures RSSI sur les messages reçus des dispositifs émetteurs d'intérêt 40 et transmettre des informations représentatives de ces mesures RSSI au réseau d'accès 30 qui peut alors les utiliser pour estimer la position géographique précise du terminal 20.

## Revendications

1. - Procédé (60) de géolocalisation d'un terminal (20) d'un système (10) de communication sans fil, le terminal (20) étant adapté à échanger des messages avec un réseau d'accès (30) dudit système de communication sans fil selon un premier protocole de communication sans fil, ledit procédé comporte :
- une réception (61), par le terminal (20), d'un message émis selon un second protocole de communication sans fil par un dispositif émetteur d'intérêt (40),
- une obtention (62) d'une information d'identification ambigüe du dispositif émetteur d'intérêt, **caractérisé en ce que** ledit procédé comporte :
- une émission (63), par le terminal (20) et à destination du réseau d'accès (30), d'un message comportant l'information d'identification ambigüe du dispositif émetteur d'intérêt,
- une estimation (65), par le réseau d'accès (30), d'une position géographique approximative du terminal (20),
- une identification (66), par le réseau d'accès (30), dans une table mémorisant une liste d'identifiants de dispositif émetteurs et les positions géographiques respectives desdits dispositifs émetteurs, du dispositif émetteur d'intérêt comme étant le dispositif émetteur dans la table dont l'identifiant correspond à l'information d'identification ambigüe et dont la position géographique correspond à la position géographique approximative du terminal (20),
- une estimation (67), par le réseau d'accès (30), de la position géographique précise dudit terminal en fonction de la position géographique du dispositif émetteur d'intérêt,
l'information d'identification étant ambigüe **en ce qu'**elle est susceptible de correspondre à plusieurs dispositifs émetteurs dont les positions géographiques sont mémorisées dans la table.

2. - Procédé (60) selon la revendication 1, dans lequel le message reçu dudit dispositif émetteur d'intérêt comporte un identifiant ambigu dudit dispositif émetteur d'intérêt, et dans lequel l'information d'identification ambigüe correspond audit identifiant.

3. - Procédé (60) selon la revendication 1, dans lequel le message reçu dudit dispositif émetteur d'intérêt comporte un identifiant dudit dispositif émetteur d'intérêt, et dans lequel l'obtention (62) de l'information d'identification ambigüe comporte une compression avec perte de l'identifiant inclus dans le message reçu du dispositif émetteur d'intérêt.

4. - Procédé (60) selon l'une des revendications précédentes, dans lequel plusieurs dispositifs émetteurs d'intérêt sont utilisés, la position géographique précise dudit terminal étant estimée en fonction des positions géographiques respectives desdits dispositif émetteurs d'intérêt.

5. - Procédé (60) selon la revendication 4, dans lequel les informations d'identification ambigües d'au moins deux dispositifs émetteurs d'intérêt sont émises, à destination du réseau d'accès (30), dans un même message selon le premier protocole de communication sans fil.

6. - Procédé (60) selon l'une des revendications précédentes, dans lequel le second protocole de communication sans fil est de portée inférieure à la portée du premier protocole de communication sans fil.

7. - Procédé (60) selon l'une des revendications précédentes, dans lequel la position géographique approximative du terminal est estimée en fonction d'au moins un message reçu par au moins une station de base du réseau d'accès, ladite station de base étant de position géographique prédéterminée.

8. - Procédé (60) selon l'une des revendications précédentes, dans lequel l'estimation (65) de la position géographique approximative du terminal (20) est effectuée par le réseau d'accès (30) sans qu'une information explicite contribuant à cette estimation ne soit envoyée par le terminal dans un message à destination du réseau d'accès.

9. - Terminal (20) d'un système (10) de communication sans fil, ledit terminal comportant un premier module de communication (21) adapté à échanger des messages avec un réseau d'accès (30) du système de communication sans fil selon un premier protocole de communication sans fil, et un second module de communication (22) adapté à recevoir des messages selon un second protocole de communication sans fil, **caractérisé en ce que** ledit terminal (70) est configuré pour :
- recevoir, par le second module de communication, un message émis par un dispositif émetteur d'intérêt,
- obtenir, par un circuit de traitement (23) du terminal, une information d'identification ambigüe dudit dispositif émetteur d'intérêt,
- émettre à destination du réseau d'accès (30), par le premier module de communication, un message comportant l'information d'identification ambigüe dudit dispositif émetteur d'intérêt,
l'information d'identification étant ambigüe **en ce qu'**elle est susceptible de correspondre à plusieurs dispositifs émetteurs dont les positions géographiques sont mémorisées dans une table accessible par le réseau d'accès (30).

10. - Terminal (20) selon la revendication 9, dans lequel le circuit de traitement (23) est configuré pour obtenir l'information d'identification ambigüe du dispositif émetteur d'intérêt à partir d'un identifiant dudit dispositif émetteur d'intérêt inclus dans le message reçu dudit dispositif émetteur d'intérêt.

11. - Terminal (20) selon la revendication 10, dans lequel le circuit de traitement (23) est configuré pour obtenir l'information d'identification ambigüe du dispositif émetteur d'intérêt par compression avec perte de l'identifiant dudit dispositif émetteur d'intérêt.

12. - Réseau d'accès (30) d'un système (10) de communication sans fil, ledit réseau d'accès étant adapté à échanger des messages avec un terminal, **caractérisé en ce que** ledit réseau d'accès (30) est configuré pour :
- recevoir un message émis par le terminal, ledit message comportant une information d'identification ambigüe d'un dispositif émetteur d'intérêt au voisinage dudit terminal,
- estimer une position géographique approximative du terminal (20),
- identifier, dans une table mémorisant une liste d'identifiants de dispositif émetteurs et les positions géographiques respectives desdits dispositifs émetteurs, le dispositif émetteur d'intérêt comme étant le dispositif émetteur dans la table dont l'identifiant correspond à l'information d'identification ambigüe et dont la position géographique correspond à la position géographique approximative du terminal (20),
- estimer la position géographique précise dudit terminal en fonction de la position géographique du dispositif émetteur d'intérêt,
l'information d'identification étant ambigüe **en ce qu'**elle est susceptible de correspondre à plusieurs dispositifs émetteurs dont les positions géographiques sont mémorisées dans la table.

13. - Réseau d'accès (30) selon la revendication 12, dans lequel, la table étant mémorisée dans un serveur de géolocalisation externe audit réseau d'accès, ledit réseau d'accès comporte un serveur d'interrogation configuré pour :
- émettre une requête (R1) de position géographique du dispositif émetteur d'intérêt à destination dudit serveur de géolocalisation, ladite requête de position géographique comportant l'information d'identification ambigüe du dispositif émetteur d'intérêt et la position géographique approximative du terminal (20),
- recevoir dudit serveur de géolocalisation une réponse (R2) comportant la position géographique dudit dispositif émetteur d'intérêt.

14. - Réseau d'accès (30) selon la revendication 12, dans lequel, la table étant mémorisée dans un serveur de géolocalisation externe audit réseau d'accès, ledit réseau d'accès comporte un serveur d'interrogation configuré pour :
- émettre une requête (R1) de position géographique du dispositif émetteur d'intérêt à destination dudit serveur de géolocalisation, ladite requête de position géographique comportant l'information d'identification ambigüe du dispositif émetteur d'intérêt,
- recevoir dudit serveur de géolocalisation une réponse (R2) comportant les positions géographiques des dispositifs émetteurs dont les identifiants correspondent à l'information d'identification ambigüe,
ledit réseau d'accès étant configuré pour identifier la position géographique du dispositif émetteur d'intérêt comme étant la position géographique reçue correspondant à la position géographique approximative du terminal (20).

15. - Système (10) de communication sans fil comprenant un terminal (20) selon l'une des revendications 9 à 11 et un réseau d'accès (30) selon l'une des revendications 12 à 14.

16. - Serveur de géolocalisation (50) comportant des moyens de mémorisation dans lesquels est mémorisée une table comportant une liste d'identifiants de dispositifs émetteurs et les positions géographiques respectives desdits dispositifs émetteurs, **caractérisé en ce qu'**il comporte des moyens configurés pour :
- recevoir une requête (R1) de position géographique d'un dispositif émetteur d'intérêt, ladite requête de position géographique comportant une information d'identification ambigüe du dispositif émetteur d'intérêt et une position géographique approximative,
- identifier un dispositif émetteur dans la table dont l'identifiant mémorisé correspond à l'information d'identification ambigüe reçue et dont la position géographique correspond à la position géographique approximative reçue,
- émettre une réponse (R2) comportant la position géographique du dispositif émetteur identifié dans la table,
l'information d'identification étant ambigüe **en ce qu'**elle est susceptible de correspondre à plusieurs dispositifs émetteurs dont les positions géographiques sont mémorisées dans la table.

## Patentansprüche

1. Verfahren (60) zur Geolokalisierung eines Endgeräts (20) eines drahtlosen Kommunikationssystems (10), wobei das Endgerät (20) angepasst ist, um Nachrichten mit einem Zugangsnetz (30) des drahtlosen Kommunikationssystems entsprechend einem ersten drahtlosen Kommunikationsprotokoll auszutauschen, wobei das Verfahren Folgendes beinhaltet:
- einen Empfang (61) durch das Endgerät (20) einer entsprechend einem zweiten drahtlosen Kommunikationsprotokoll durch eine Sendervorrichtung von Interesse (40) ausgegebenen Nachricht,
- einen Erhalt (62) einer mehrdeutigen Identifizierungsinformation von der Sendervorrichtung von Interesse,
**dadurch gekennzeichnet, dass** das Verfahren Folgendes beinhaltet:
- eine Sendung (63) durch das Endgerät (20) und zum Zugangsnetz (30) einer Nachricht, die die mehrdeutige Identifizierungsinformation der Sendervorrichtung von Interesse beinhaltet,
- eine Schätzung (65) durch das Zugangsnetz (30) einer annähernden geografischen Position des Endgerätes (20),
- eine Identifizierung (66) durch das Zugangsnetz (30) in einer Tabelle, die eine Liste mit Sendervorrichtungskennungen und die jeweiligen geografischen Positionen der Sendervorrichtungen speichert, der Sendervorrichtung von Interesse als jene, die die Sendervorrichtung in der Tabelle ist, deren Kennung der mehrdeutigen Identifizierungsinformation entspricht, und deren geografische Position der annähernden geografischen Position des Endgeräts (20) entspricht,
- eine Schätzung (67) durch das Zugangsnetz (30) der präzisen geografischen Position des Endgeräts in Abhängigkeit von der geografischen Position der Sendervorrichtung von Interesse,
wobei die Identifizierungsinformation dadurch mehrdeutig ist, dass sie mehreren Sendervorrichtungen entsprechen kann, deren geografische Positionen in der Tabelle gespeichert sind.

2. Verfahren (60) nach Anspruch 1, wobei die von der Sendervorrichtung von Interesse empfangene Nachricht eine mehrdeutige Kennung der Sendervorrichtung von Interesse beinhaltet, und wobei die mehrdeutige Identifizierungsinformation der Kennung entspricht.

3. Verfahren (60) nach Anspruch 1, wobei die von der Sendervorrichtung von Interesse empfangene Nachricht eine Kennung der Sendervorrichtung von Interesse beinhaltet, und wobei der Erhalt (62) einer mehrdeutigen Identifizierungsinformation eine Kompression mit Verlust der Kennung beinhaltet, die in der von der Sendervorrichtung von Interesse empfangenen Nachricht beinhaltet ist.

4. Verfahren (60) nach einem der vorstehenden Ansprüche, wobei mehrere Sendervorrichtungen von Interesse verwendet werden, wobei die präzise geografische Position des Endgeräts in Abhängigkeit von den jeweiligen geografischen Positionen der Sendervorrichtungen von Interesse geschätzt werden.

5. Verfahren (60) nach Anspruch 4, wobei die mehrdeutigen Identifizierungsinformationen von mindestens zwei Sendervorrichtungen von Interesse in einer selben Nachricht entsprechend dem ersten drahtlosen Kommunikationsprotokoll zum Zugangsnetz (30) ausgegeben werden.

6. Verfahren (60) nach einem der vorstehenden Ansprüche, wobei das zweite drahtlose Kommunikationsprotokoll von geringerer Reichweite als die Reichweite des ersten drahtlosen Kommunikationsprotokoll ist.

7. Verfahren (60) nach einem der vorstehenden Ansprüche, wobei die annähernde geografische Position des Endgeräts in Abhängigkeit von mindestens einer Nachricht geschätzt wird, die durch mindestens eine Basisstation des Zugangsnetzes empfangen wird, wobei die Basisstation in einer vorbestimmten geografischen Position ist.

8. Verfahren (60) nach einem der vorstehenden Ansprüche, wobei die Schätzung (65) der annähernden geografischen Position des Endgeräts (20) durch das Zugangsnetz (30) ausgeführt wird, ohne dass eine ausdrückliche Information, die zu dieser Schätzung beiträgt, durch das Endgerät in einer Nachricht zum Zugangsnetz geschickt wird.

9. Endgerät (20) eines drahtlosen Kommunikationssystems (10), wobei das Endgerät ein erstes Kommunikationsmodul (21) beinhaltet, das angepasst ist, um Nachrichten mit einem Zugangsnetz (30) des drahtlosen Kommunikationssystems entsprechend einem ersten drahtlosen Kommunikationsprotokoll auszutauschen, und ein zweites Kommunikationsmodul (22), das angepasst ist, um Nachrichten entsprechend einem zweiten drahtlosen Kommunikationsprotokoll auszutauschen,
**dadurch gekennzeichnet, dass** das Endgerät (70) konfiguriert ist zum:
- Empfangen durch das zweite Kommunikationsmodul einer durch eine Sendervorrichtung von Interesse ausgegebenen Nachricht,
- Erhalten durch eine Bearbeitungsschaltung (23) des Endgeräts einer mehrdeutigen Identifizierungsinformation von der Sendervorrichtung von Interesse,
- Senden zum Zugangsnetz (30) durch das erste Kommunikationsmodul einer Nachricht, die die mehrdeutige Identifizierungsinformation der Sendervorrichtung von Interesse beinhaltet,
wobei die Identifizierungsinformation dadurch mehrdeutig ist, dass sie mehreren Sendervorrichtungen entsprechen kann, deren geografische Positionen in einer Tabelle gespeichert sind, auf die durch das Zugangsnetz (30) zugegriffen werden kann.

10. Endgerät (20) nach Anspruch 9, wobei die Bearbeitungsschaltung (23) konfiguriert ist, um die mehrdeutige Identifizierungsinformation von der Sendervorrichtung von Interesse aus einer Kennung der Sendervorrichtung von Interesse zu erhalten, die in der von der Sendervorrichtung von Interesse empfangenen Nachricht beinhaltet ist.

11. Endgerät (20) nach Anspruch 10, wobei die Bearbeitungsschaltung (23) konfiguriert ist, um die mehrdeutige Identifizierungsinformation von der Sendervorrichtung von Interesse durch Kompression mit Verlust der Kennung der Sendervorrichtung von Interesse zu erhalten.

12. Zugangsnetz (30) eines drahtlosen Kommunikationssystems (10), wobei das Zugangsnetz angepasst ist, um Nachrichten mit einem Endgerät auszutauschen, **dadurch gekennzeichnet, dass** das Zugangsnetz (30) konfiguriert ist zum:
- Empfangen einer durch das Endgerät ausgegebenen Nachricht, wobei die Nachricht eine mehrdeutige Identifizierungsinformation einer Sendervorrichtung von Interesse in der Umgebung des Endgeräts beinhaltet,
- Schätzen einer annähernden geografischen Position des Endgeräts (20),
- Identifizieren in einer Tabelle, die eine Liste mit Sendervorrichtungskennungen und die jeweiligen geografischen Positionen der Sendervorrichtungen speichert, der Sendervorrichtung von Interesse als jene, die die Sendervorrichtung in der Tabelle ist, deren Kennung der mehrdeutigen Identifizierungsinformation entspricht, und deren geografische Position der annähernden geografischen Position des Endgeräts (20) entspricht,
- Schätzen der präzisen geografischen Position des Endgeräts in Abhängigkeit von der geografischen Position der Sendervorrichtung von Interesse,
wobei die Identifizierungsinformation dadurch mehrdeutig ist, dass sie mehreren Sendervorrichtungen entsprechen kann, deren geografische Positionen in der Tabelle gespeichert sind.

13. Zugangsnetz (30) nach Anspruch 12, wobei das Zugangsnetz, da die Tabelle in einem Geolokalisierungsserver außerhalb des Zugangsnetzes gespeichert ist, einen Abfrageserver beinhaltet, der konfiguriert ist zum:
- Senden einer Anfrage (R1) einer geografischen Position der Sendervorrichtung von Interesse an den Geolokalisierungsserver, wobei die Anfrage einer geografischen Position die mehrdeutige Identifizierungsinformation der Sendervorrichtung von Interesse und die annähernde geografische Position des Endgeräts (20) beinhaltet,
- Empfangen von dem Geolokalisierungsserver einer Antwort (R2), die die geografische Position der Sendervorrichtung von Interesse beinhaltet.

14. Zugangsnetz (30) nach Anspruch 12, wobei das Zugangsnetz, da die Tabelle in einem Geolokalisierungsserver außerhalb des Zugangsnetzes gespeichert ist, einen Abfrageserver beinhaltet, der konfiguriert ist zum:
- Senden einer Anfrage (R1) einer geografischen Position der Sendervorrichtung von Interesse an den Geolokalisierungsserver, wobei die Anfrage einer geografischen Position die mehrdeutige Identifizierungsinformation der Sendervorrichtung von Interesse beinhaltet,
- Empfangen von dem Geolokalisierungsserver einer Antwort (R2), die die geografischen Positionen der Sendervorrichtungen von Interesse beinhaltet, deren Kennungen der mehrdeutigen Identifizierungsinformation entsprechen,
wobei das Zugangsnetz konfiguriert ist, um die geografische Position der Sendervorrichtung von Interesse als jene zu identifizieren, die die geografische Position ist, die entsprechend der annähernden geografischen Position des Endgeräts (20) empfangen wird.

15. Drahtloses Kommunikationssystem (10), das ein Endgerät (20) nach einem der Ansprüche 9 bis 11 und ein Zugangsnetz (30) nach einem der Ansprüche 12 bis 14 umfasst.

16. Geolokalisierungsserver (50), der Speichermittel beinhaltet, in denen eine Tabelle gespeichert ist, die eine Liste mit Kennungen von Sendervorrichtungen und die jeweiligen geografischen Positionen der Sendervorrichtungen beinhaltet, **dadurch gekennzeichnet, dass** er Mittel beinhaltet, die konfiguriert sind zum:
- Empfangen einer Anfrage (R1) einer geografischen Position einer Sendervorrichtung von Interesse, wobei die Anfrage einer geografischen Position eine mehrdeutige Identifizierungsinformation der Sendervorrichtung von Interesse und eine annähernde geografische Position beinhaltet,
- Identifizieren einer Sendervorrichtung in der Tabelle, deren gespeicherte Kennung der empfangenen mehrdeutigen Identifizierungsinformation entspricht, und deren geografische Position der empfangenen annähernden geografischen Position entspricht,
- Senden einer Antwort (R2), die die geografische Position der in der Tabelle identifizierten Sendervorrichtung beinhaltet,
wobei die Identifizierungsinformation dadurch mehrdeutig ist, dass sie mehreren Sendervorrichtungen entsprechen kann, deren geografische Positionen in der Tabelle gespeichert sind.

## Claims

1. - A method (60) for geolocating a terminal (20) of a wireless communication system (10), the terminal (20) being adapted to exchange messages with an access network (30) of said wireless communication system according to a first wireless communication protocol, said method includes:
- receiving (61), by the terminal (20), a message transmitted according to a second wireless communication protocol by a transmitting device of interest (40),
- obtaining (62) an ambiguous item of identification information from the transmitting device of interest,
**characterised in that** the method includes:
- transmitting (63), by the terminal (20) and to the access network (30), a message including the ambiguous item of identification information of the transmitting device of interest,
- estimating (65), by the access network (30), an approximate geographical position of the terminal (20),
- identifying (66), by the access network (30), in a table storing a list of transmitting device identifiers and the respective geographical positions of said transmitting devices, the transmitting device of interest as being the transmitting device in the table whose identifier corresponds to the ambiguous item of identification information and whose geographical position corresponds to the approximate geographical position of the terminal (20),
- estimating (67), by the access network (30), the precise geographical position of said terminal based on the geographical position of the transmitting device of interest,
the item of identification information is ambiguous **in that** it is likely to correspond to several transmitting devices whose geographical positions are stored in the table.

2. - The method (60) according to claim 1, wherein the message received from said transmitting device of interest includes an ambiguous identifier of said transmitting device of interest, and wherein the ambiguous item of identification information corresponds to said identifier.

3. - The method (60) according to claim 1, wherein the message received from said transmitting device of interest includes an identifier of said transmitting device of interest, and wherein obtaining (62) the ambiguous item of identification information includes a lossy compression of the identifier included in the message received from the transmitting device of interest.

4. - The method (60) according to one of the preceding claims, wherein several transmitting devices of interest are used, the precise geographical position of said terminal being estimated based on the respective geographical positions of said transmitting devices of interest.

5. - The method (60) according to claim 4, wherein the ambiguous items of identification information of at least two transmitting devices of interest are transmitted to the access network (30), in the same message according to the first wireless communication protocol.

6. - The method (60) according to one of the preceding claims, wherein the range of the second wireless communication protocol is less than the range of the first wireless communication protocol.

7. - The method (60) according to one of the preceding claims, wherein the approximate geographical position of the terminal is estimated based on at least one message received by at least one base station of the access network, said base station being of predetermined geographical position.

8. - The method (60) according to one of the preceding claims, wherein the estimation (65) of the approximate geographical position of the terminal (20) is performed by the access network (30) without any explicit information contributing to this estimation being sent by the terminal in a message to the access network.

9. - A terminal (20) of a wireless communication system (10), said terminal including a first communication module (21) adapted to exchange messages with an access network (30) of the wireless communication system according to a first wireless communication protocol, and a second communication module (22) adapted to receive messages according to a second wireless communication protocol, **characterised in that** said terminal (70) is configured for:
- receiving, by the second communication module, a message transmitted by a transmitting device of interest,
- obtaining, by a processing circuit (23) of the terminal, an ambiguous item of identification information of said transmitting device of interest,
- transmitting to the access network (30), by the first communication module, a message including the ambiguous item of identification information of said transmitting device of interest,
the item of identification information is ambiguous **in that** it is likely to correspond to several transmitting devices whose geographical positions are stored in a table accessible by the access network (30).

10. - The terminal (20) according to claim 9, wherein the processing circuit (23) is configured to obtain the ambiguous item of identification information of the transmitting device of interest from an identifier of said transmitting device of interest included in the message received from said transmitting device of interest.

11. - The terminal (20) according to claim 10, wherein the processing circuit (23) is configured to obtain the ambiguous item of identification information of the transmitting device of interest by lossy compression of the identifier of said transmitting device of interest.

12. - An access network (30) of a wireless communication system (10), said access network being adapted to exchange messages with a terminal, **characterised in that** said access network (30) is configured for:
- receiving a message transmitted by the terminal, said message including an ambiguous item of identification information of a transmitting device of interest in the vicinity of said terminal,
- estimating an approximate geographical position of the terminal (20),
- identifying, in a table storing a list of transmitting device identifiers and the respective geographical positions of said transmitting devices, the transmitting device of interest as being the transmitting device in the table whose identifier corresponds to the ambiguous item of identification information and whose geographical position corresponds to the approximate geographical position of the terminal (20),
- estimating the precise geographical position of said terminal based on the geographical position of the transmitting device of interest,
the item of identification information is ambiguous **in that** it is likely to correspond to several transmitting devices whose geographical positions are stored in the table.

13. - The access network (30) according to claim 12, wherein, the table being stored in a geolocation server external to said access network, said access network includes an enquiry server configured for:
- transmitting a request (R1) for the geographical position of the transmitting device of interest to said geolocation server, said request for a geographical position including the ambiguous item of identification information of the transmitting device of interest and the approximate geographical position of the terminal (20),
- receiving from said geolocation server a response (R2) including the geographical position of said transmitting device of interest.

14. - The access network (30) according to claim 12, wherein, the table being stored in a geolocation server external to said access network, said access network includes an enquiry server configured for:
- transmitting a request (R1) for the geographical position of the transmitting device of interest to said geolocation server, said request for a geographical position including the ambiguous item of identification information of the transmitting device of interest,
- receiving from said geolocation server a response (R2) including the geographical positions of the transmitting devices whose identifiers correspond to the ambiguous item of identification information,
said access network being configured to identify the geographical position of the transmitting device of interest as being the received geographical position corresponding to the approximate geographical position of the terminal (20).

15. - A wireless communication system (10) comprising a terminal (20) according to one of claims 9 to 11 and an access network (30) according to one of claims 12 to 14.

16. - A geolocation server (50) including storage means wherein is stored a table including a list of transmitting device identifiers and the respective geographical positions of said transmitting devices, **characterised in that** it includes means configured for:
- receiving a request (R1) for the geographical position of a transmitting device of interest, said request for a geographical position including an ambiguous item of identification information of the transmitting device of interest and an approximate geographical position,
- identifying a transmitting device in the table whose stored identifier corresponds to the received ambiguous item of identification information and whose geographical position corresponds to the received approximate geographical position,
- transmitting a response (R2) including the geographical position of the transmitting device identified in the table,
the item of identification information is ambiguous **in that** it is likely to correspond to several transmitting devices whose geographical positions are stored in the table.
